# EUROPEAN PATENT APPLICATION

(11) **EP 4 610 130 A1**
(43) Date of publication of application: **03.09.2025**
(21) Application number: 24160371.1
(22) Date of filing: 28.02.2024
(51) Int. Cl.: B60W 30/09

(54) **METHOD FOR REDUCING A RISK OF A COLLISION OF A ROAD USER WITH A REAR-END OF A VEHICLE**

(71) Applicant: Volvo Car Corporation, 405 31 Göteborg (SE)
(72) Inventor: PEREZ BARRERA, Oswaldo, 40531 Göteborg (SE)
(74) Representative: Maiwald GmbH

(57) **Abstract**

The disclosure relates to a computer-implemented method (100) for reducing a risk of a collision of a road user (2) with a rear-end (11) of a vehicle (1). The method (100) comprises obtaining first data indicative of a position of the road user (2) in a zone (3) behind the rear-end (11) of the vehicle (101), obtaining second data indicative of the road user (2) being a vulnerable road user (2) (102), and providing a control instruction for controlling the vehicle (1) for reducing the risk of the rear-end collision based on the first data and the second data (103).

## Description

### TECHNICAL FIELD

The present disclosure relates to a method for reducing the risk of a collision of a road user with a rear-end of a vehicle, a computer program product, a data processing device, and a vehicle comprising at least one of the computer program product, and the data processing device.

### BACKGROUND ART

In traffic, different kinds of road users may share a road. The road user may be any individual or entity that utilizes the road for transportation, whether it be pedestrians, cyclists, motorcyclists, or drivers of various vehicles. A road user may be in motion while a vehicle in front of that road user undertakes an unexpected action, such as sudden deceleration or making an abrupt turn. For example, the unexpected action may be because of a traffic situation ahead of the vehicle such as a traffic accident. The road user may have no clear sight of the traffic situation and/or be unprepared to take a counteractive action. Especially, in case of vulnerable road users such as, for example, bicycles or motorcycles, that may be smaller in size compared to other road users or vehicles such as passenger cars or trucks, the sight of the vulnerable road users may be obstructed by the larger vehicles in front, preventing early realization of the traffic situation ahead. Accordingly, a collision of the vulnerable road user with a rear-end of the vehicle in front may take place.

The situation may be particularly critical when the road user is a vulnerable road user. This means that the road user is susceptible to injury or harm in a traffic accident compared to other road users, such as vehicles in the form of passenger cars or trucks. For instance, vulnerable road user may be a pedestrian, a motorcyclists, or a cyclist. These vulnerable road users have no or little protection, e.g., only helmets or protective clothing, compared to full frame vehicles and vehicles with security features such as airbags. Fatalities of vulnerable road users by rear-end collisions is at a high rate compared to the fatalities caused by other collision types such as a three-way junction accident, a head-on collision, a right turn collision or a sideswipe.

### SUMMARY

The problem of occurrence of collisions of vulnerable road users with rear-ends of vehicles, also referred to as rear-end collisions, is at least partially solved or alleviated by the subject matter of the independent claims of the present disclosure, wherein further examples are incorporated in the dependent claims.

According to a first aspect, there is provided a computer-implemented method for reducing a risk of a collision of a road user with a rear-end of a vehicle. The method comprises obtaining first data indicative of a position of the road user in a zone behind the rear-end of the vehicle, obtaining second data indicative of the road user being a vulnerable road user, and providing a control instruction for controlling the vehicle for reducing the risk of the rear-end collision based on the first data and the second data. According to an example, the method may also comprise controlling the vehicle based on the provided control instructions.

The method for reducing the risk of a rear-end collision in particular aims to prevent collision of a road user with a rear-end of a vehicle. The term "prevent" may mean completely or at least partially reducing a risk of collision between the road user and the rear-end of the vehicle. The method may be particularly useful in city traffic with frequent traffic lights or road cross-sections, and especially without separate lanes for vulnerable road users.

The rear-end of the vehicle may be a part of the vehicle at a rear or back side of the vehicle, opposite to a front-end at a front side of the vehicle. The rear-end may also be located on a towed or similar part of a vehicle structure, such as a trailer, attached to a driving part of the vehicle, e.g., a car. Hence, the rear-end may be the rear-end of a trailer, for example. The rear-end may face away from a direction of travel. The rear-end of the vehicle may comprise or be configured as a rear bumper. The rear-end of the vehicle may comprise components such as a trunk or a cargo area, rear lights, and a rear windshield, for example. The rear-end of the vehicle may have any shape and design. It may have the same width as the front-end of the vehicle or may be wider than the front-end of the vehicle. The rear-end may, due to its dimensions such as height and/or width in comparison to the road user, prevent the road user from observing the road in front of the vehicle. For example, the vehicle may be a passenger car, a truck or any other kind of motorized vehicle having three, four or more wheels.

In the method, the second data may be indicative of the road user being a vulnerable road user. When it comes to road safety, vulnerable road users may need special attention by the vehicle. While the vehicle in principle is also a road user and other road users in the form of vehicles, in particular passenger cars or trucks, may also be present in the zone behind the rear-end of the vehicle, these types of road users are well-protected in the case of a rear-end accident, particularly at lower or moderate speeds in city traffic. This is because the passengers inside these vehicles are structurally protected by the frame of the vehicle. Moreover, protective systems such as airbags or electronic systems such as automatic emergency breaking may reduce the risk of an injury in case of a rear-end collision or even prevent or at least reduce the impact on the passengers inside the vehicle from the rear-end collision. However, with vulnerable road users, this is not the case. Typically, vulnerable road users have no to little protection, e.g., only helmet, protective clothing or similar, and are thus particularly susceptible to being injured in case of a rear-end collision with a vehicle. Accordingly, the second data may indicate that a vulnerable road user in the zone behind the rear-end of the vehicle may be harmed when the collision with the rear-end of the vehicle is not avoided. This may correspondingly trigger the provision of the control instruction. Accordingly, while for road users such as vehicles in the form of passenger cars, the control instruction may not be provided or may be different, for vulnerable road users based on the second data, the risk reducing control of the vehicle may be executed to prevent injury of the vulnerable road user.

The method further comprises providing a control instruction for controlling the vehicle for reducing a risk of the rear-end collision based on the first data and the second data. The vehicle may in particular be a fully or partially autonomous vehicle, i.e., provided with at least partially autonomous driving capabilities or configured with different levels for autonomous driving. An autonomous vehicle may require a reduced interference or no interference of an occupant in the control of the autonomous vehicle. The control instruction may comprise or be at least one instruction that is configured to bring the vehicle to a position relative to the vulnerable road user such that a collision is less likely or not expected to take place. In particular, the control instruction may comprise or be at least one instruction that is configured to divert from a route of the vehicle from an expected route of the vulnerable road user. This may prevent a coincidence of the routes of the vehicle and the vulnerable road user, preferably at an instant of an (expected) rear-end collision. The control instruction may comprise multiple sequential or simultaneous instructions to reduce the risk of the rear-end collision.

Besides the above explained case in which the vulnerable road user may not have sight of the traffic situation ahead of the vehicle, the method may also be advantageous in a case of an inability, e.g., reaction too slow or distracted while moving, of the vulnerable road user to reduce the risk of the rear-end collision by providing the vehicle with a control instruction for reducing the risk of such a rear-end collision. Thus, the method may ensure collision avoidance with the vulnerable road user and thereby protect the vulnerable road user. By providing the control instructions only for vulnerable road users in the zone behind the rear-end of the vehicle, an unnecessary activation of the method may be avoided. For instance, the method may not provide or stop providing the control instruction when the position of the vulnerable road user is out of the zone behind the rear-end of the vehicle. Accordingly, a reliable and an efficient method for reducing a risk of a rear-end collision may be provided.

According to an example, the vulnerable road user may be any of a bicyclist (cyclist), a motorcyclist, and a scooter rider. The vulnerable road user may be prone to injuries because transportation means such as bicycles, motorcycles and scooters lack preventive measures or afford only reduced protection of the road user. Especially road users of bicycles, motorcycles and scooters, being on a two-wheeled transportation means may have difficulty in keeping balance as a result of a collision, causing the road user to come into direct contact with a road on which the road user is driving. Accordingly, a damage to the vulnerable road user may be destructive, and increased attention may be needed by other road users such as the vehicle, which may not be simply observing the vulnerable road user based on the first data but also take action based on the control instruction.

According to an example, the method may comprise obtaining third data indicative of a deceleration to be performed by the vehicle in response to at least one of a traffic situation ahead of a current position of the vehicle and a routing of the vehicle. Here, the instruction may be further based on the third data. The deceleration may need to be performed when a traffic situation ahead of the vehicle requires the vehicle to slow down and/or stop completely. The traffic situation may comprise a situation caused by other road users, such as vehicles, or other vulnerable road users, such as pedestrians or cyclists. The traffic situation may be caused by traffic infrastructure elements such as traffic lights, traffic signals, road signs, road markings, traffic control devices, traffic police, or environmental disturbances such as construction sites or traffic accidents. The obtained third data may be indicative of a deceleration to be performed by the vehicle in response to the routing of the vehicle. The routing may be based on a predetermined route for the vehicle, for instance predetermined by a processor by using navigation data, such as for example a vehicle integrated navigation system. The routing may, for instance, require the vehicle to change lanes or make a turn, which could require deceleration of the vehicle. Accordingly, the third data may comprise essential conditions that may lead to the vehicle's deceleration in order to follow the routing.

Based on a type of the traffic situation, the third data may comprise a rate of deceleration to be performed by the vehicle. The rate of deceleration may be higher for a situation caused by other road users (or other vulnerable road users) or environmental disturbances than a situation caused by traffic infrastructure elements. The rate of deceleration may be increased based on a distance of the traffic situation to the vehicle at a time of detecting the traffic situation. Further, a combination of multiple traffic situations may cause an increase in the rate of deceleration. By including the rate of deceleration, the third data may support providing of an accurate method for collision avoidance.

According to an example, the control instruction may be configured to avoid or limit the deceleration to be performed by the vehicle as indicated by the third data. Accordingly, the method may further comprise, before providing the control instruction, obtaining fourth data indicating whether the deceleration to be performed by the vehicle as indicated by the third data is a mandatory deceleration (for instance, when there is an object, traffic light, speed bump in front of the vehicle, that the vehicle cannot be stopped without putting other road users' lives in risk) or optional deceleration (for instance, if there is a pick up or drop off location, turns in navigation that can be re-routed in front of the vehicle, that the vehicle can continue driving without putting other road users' lives in risk). The control instruction may be configured to avoid or limit the deceleration if the fourth data indicates an optional deceleration. Otherwise, if the vehicle would be decelerated, the vulnerable road user may collide with the rear-end of the vehicle due to the vulnerable road user being located in the zone behind the rear-end of the vehicle. When the fourth data indicates a mandatory deceleration, the control instruction may be configured not to avoid or limit the deceleration to be performed. In case the fourth data indicates mandatory deceleration, a different control instruction may be provided than if the deceleration would be optional. For example, a control instruction for the optional deceleration may comprise re-routing of the vehicle, in particular instead of decelerating (avoiding deceleration) or decelerating at a low rate while changing lane (limiting deceleration). For the re-routing of the vehicle, an existing routing, e.g., based on the navigation data and/or input from the driver or user of the vehicle, may be overwritten, replaced, deleted and/or amended. Accordingly, the vehicle may flexibly respond to the traffic situation or route (based on the routing) ahead of the current position of the vehicle and, if traffic allows, reduce the risk of a rear-end collision without risk to any other road user.

In an example the control instruction may be based on a risk of the rear-end collision, which may be determined based on the first data, the second data and the third data. For instance, a high risk of a rear-end collision may lead to providing a control instruction comprising re-routing of the vehicle. Re-routing may mean a calculation of an alternative route than a route on which the vehicle is travelling. Whereas, a control instruction for a low risk rear-end collision may comprise decelerating the vehicle, e.g., by means of braking.

According to an example, the control instruction may be configured for at least one of accelerating, laterally moving, and re-routing the vehicle. When the third data is obtained and with deceleration of the vehicle, the vulnerable road user may be put in danger. Accordingly, the vehicle may undertake measures to reduce the risk of the rear-end collision of the vulnerable road user with the vehicle. In this example, different measures are listed. The measures may cause diverging a route of the vehicle from the route of the vulnerable road user (in other words, from an expected route of the vulnerable road user, for instance when the vulnerable road user continues in a same direction of travel).

In one example, the control instruction may be configured for accelerating the vehicle. Acceleration may be applied for instance when there is enough space between the vehicle and a second vehicle in front of the vehicle (front vehicle). The vehicle may increase a distance to the front vehicle before accelerating. By accelerating the vehicle, the vehicle may increase a distance between itself and the vulnerable road user. Thereby a space between the vehicle and the front vehicle may be utilized for collision avoidance with the vulnerable road user. In particular, the vulnerable road user may be thereby brought out of the zone behind the rear-end of the vehicle such that the method does not need to be utilized anymore for the same vulnerable road user, unless the vulnerable road user or another vulnerable road user comes into the zone again.

In another example, the control instruction may be configured for moving the vehicle laterally, for instance when there is enough space between the vehicle and a lateral side of a lane on which the vehicle is driving. This may be required when the vulnerable road user is in a zone behind and lateral to the rear-end of the vehicle. The control instruction configured for moving the vehicle laterally may move the vehicle away from the vulnerable road user (in other words, away from a route of the vulnerable road user) and provide space in front of the vulnerable road user.

In a further example, the control instruction may be configured for re-routing the vehicle. The method may obtain an alternative route, instead of a current route (for instance a previously calculated route), to a particular destination, and the control instruction may reroute the vehicle such that collision of the vulnerable road user with the rear-end of the vehicle may be avoided. The control instruction for re-routing may comprise a turn or lane change out of the route of the vulnerable road user. In this example, in case of the vehicle being an autonomous vehicle, the occupant may be informed of the re-routing.

According to an example the method may comprise providing a notification indicative of the deceleration to be performed by the vehicle for or to at least one of a device of the vulnerable road user and another vehicle (a second vehicle). Hence, the notification may be used by the device of the vulnerable road user and/or the another vehicle. The vehicle may accordingly comprise a communication equipment capable of transmitting and/or receiving signals to and from the device of the vulnerable road user and/or the second vehicle. The communication equipment may comprise a wireless, in particular long-range or short-range, communication module, modem, or any other form of wireless communication unit and based on any wireless signal communication technology, e.g., Bluetooth, a cellular standard, wifi, or similar. The vehicle may further comprise a microcontroller or processor to manage a communication process between the vehicle and the device. The microcontroller or processor may process signals, interface with at least one sensor or other systems in the vehicle, and send data to the communication equipment. Accordingly, the method may provide a notification indicative of the deceleration to be performed to the device of the vulnerable road user and/or to the second vehicle.

For example, the device may be a cell phone, smartphone, smartwatch or any other electronic device of the vulnerable road user. Especially, if the vulnerable road user is distracted (not looking at a travel direction) and looking at the cell phone, the deceleration to be performed by the vehicle may be notified to the vulnerable road user. The vehicle may detect more than one device and notify only the device(s) that may be carried by the vulnerable road user who may be affected by the deceleration of the vehicle. Based on a movement velocity of the device, it can be detected if the device is carried by a vulnerable road user or a road user which is not a vulnerable road user. The method may notify multiple devices simultaneously or consecutively. For instance, the method may notify a pedestrian crossing over a road in front of the vehicle, in addition to the vulnerable road user behind the vehicle. The road user to be notified may be prioritized, for instance based on a type of the vulnerable road user (also considering the first and the second set of indicators), its position in the traffic situation, and a movement direction of the vulnerable road user. The method may provide the notification only if multiple conditions are met at the same time. For instance, the road user that is cycling in a same direction as the vehicle is travelling, which is behind the vehicle and that is using a smartphone, can be notified, whereas the road user cycling in an opposite direction, or essentially opposite direction, to the direction as the vehicle is travelling may not be notified. Accordingly, an irrelevant notification may be avoided.

In another example, the second vehicle may be notified of the deceleration to be performed by the vehicle. This may be particularly useful, when the vulnerable road user invades a lane of the second vehicle in order to reduce the risk of the rear-end collision. The second vehicle may be travelling in a direction opposite, or essentially opposite, to the travel direction of the vehicle. The second vehicle may be travelling on a lane opposite to the vehicle and approaching towards the vehicle. In this example, the method may further comprise determining if an obtained position of the vulnerable road user on a driven lane is closer to the lane at the side of the vehicle, on which the second vehicle is driving. If the vulnerable road user is closer to a lane opposite to the lane on which the second vehicle is driving, the method may notify the vulnerable road user and/or the second vehicle. If the vulnerable road user is driving on an opposite side to the lane on which the second vehicle is driving, the method may cancel notification of the vulnerable road user and/or the second vehicle. By notifying the vulnerable road user and/or the second vehicle, an accident between the second vehicle and the vulnerable road user may be prevented or at least reduced.

According to an example, the second data may further be indicative of at least one from an age, a body posture, a driving behavior, and a traffic awareness of the vulnerable road user. These may be called a first set of indicative criteria. The second data may affect the control instruction provided by the method as it may be different for different vulnerable road users.

The age may be determined based on a height and/or a facial image of the vulnerable road user. The height may be a distance measured from a lowest point (from a foot) up to a highest point (to a head) of the vulnerable road user. A height of more than 150 cm may be an indication of an adult road user, whereas less than 150 cm may indicate a child road user, for example. Further, a facial image may be used for confirming an indicated age by the measured height of the vulnerable road user. The facial image may be obtained from a computer vision algorithm (for instance an edge detection algorithm), as may be executed by the vehicle, in particular a computer thereof, and compared with a set of pre-determined images for determining the age of the vulnerable road user. The age may be determined if the estimated age from the facial image matches the indicated age by the measured height. The control instruction may be different for a vulnerable road user of lower age (child road user) than a vulnerable road user of higher age (adult road user).

The second data may be indicative of the body posture of the vulnerable road user. The body posture may be important in case the vulnerable road user is a cyclist. The body posture may comprise an indication of a single or no hand on a handle bar of the bicycle, or a standing cyclist. A human body pose estimation algorithm, as may be executed by the vehicle, in particular a computer thereof, may be used for the body posture estimation. The body posture of the vulnerable road user may affect the control instruction provided by the method.

Moreover, the second data may be indicative of the driving behavior of the vulnerable road user. The driving behavior may comprise information such as an experience level, erratic behavior and/or an impairment level of the vulnerable road user. The experience level may be a beginner level (learning how to drive or ride) or an advanced level (competent to drive or ride). Erratic behavior may indicate irregular movement of the vulnerable road user. The impairment level may be associated with consumption of alcohol or intoxicating substances. The impairment level may be intoxicated, which may indicate low physical and mental faculties resulting from ingestion of such substances, or the impairment level may be sober, which may indicate normal physical and mental functioning and rational decision-making. The impairment level being intoxicated may change the experience level to the beginner level.

The traffic awareness may indicate if the vulnerable road user is distracted or paying attention to a driven road. The traffic awareness may comprise a confidence level of the vulnerable road user based on detected eye, head, and/or arm position of the vulnerable road user. The detection may be performed by using any available algorithm. Confidence level may be determined as "high" for instance when head position is facing the driven road, eyes are detected, and arms are on the handle bar. Confidence level may be determined as "low" when eyes are not detected, when the head position is not facing the driven road, and the arms are not on the handle bar. The confidence level may be further determined as "moderate" when eyes are not detected, the head position is down and arms on the handle bar. In the case of moderate confidence level, the vulnerable road user may be not distracted but not aware of the vehicle in front. Further, wearing glasses may prevent detection of eyes. Thus, eyes detection may be excluded from traffic awareness in case glasses are detected.

According to an example, the second data may further be indicative of at least one from an uphill road section, a downhill road section, and a road condition of a road behind the vehicle. These may be called a second set of indicative criteria. The road section/condition may affect the control instruction. The uphill road section and the downhill road section may be determined by an inclination or accelerometer sensor of the vehicle or from navigation or GPS data, for example. Downhill road section and uphill road section may require a different action compared to a flat road section. For instance, uphill road section may require a preventive action against gliding backwards (towards the vulnerable road user in the zone behind the rear-end of the vehicle).

The road condition may indicate for instance a wet condition such as icy or snow-covered road (can reduce traction, affecting braking distance), a dry condition, an uneven surface (potholes or bumps can affect a stability of the vehicle and impact braking performance), oil or grease spills (can create slick spots that reduce traction, making braking less effective), loose gravel, rocks or debris (may affect the vehicle's ability to come to a stop), mud or dirt on the road (may affect a vehicle reaction time), or sand or dust on road (may create slippery conditions, affecting the vehicle's ability to brake efficiently).

According to the previous examples, the zone (for example a size of the zone) may be defined based on the second data. Accordingly, the second data may be in particular at least one from, the traffic awareness, the body posture, the driving behavior and/or the uphill road section, the downhill road section, or the road condition. For example, the size of the zone may be determined based on a (average) breaking distance of the vulnerable road user, which may be affected by the above mentioned first and/or second set of indicators. Breaking distances based on the first and/or second set of indicators may be stored in a database, in particular for different types of vulnerable road users, e.g., motorcyclists or cyclists. The database may contain information that may be obtained empirically by testing a group of road users from different ages in different circumstances. The method may obtain the first data indicating the position of the road user in the zone, the zone being defined on a basis of the information of the database. Accordingly, the second data may be used to define the size of the zone. In addition to the second data, a reaction time of the vulnerable road user may be considered for breaking distance. For instance, in dry conditions for an adult driving at 20 km/h and reacting in 1,5 seconds, the braking time may be 5 seconds and thus the zone may have a length of 36,1 meters. In another example, in wet conditions for a child driving at 20 km/h and reacting in 2 seconds, the braking time may be 5 seconds and thus the zone may have a length of 36,1 meters. In yet another example, in dry conditions for an adult driving downhill at 20 km/h and reacting in 1,5 seconds, the braking time may be 6 seconds and thus the zone may have a length of 41,6 meters.

According to an example, the zone may comprise a first portion behind the rear-end of the vehicle. The first portion may have a width at least the width of the vehicle. The zone may further comprise second portions adjacent to the first portion. The control instruction may be further based on whether the vulnerable road user is positioned in the first portion or the second portion of the zone.

The first portion may extend in a longitudinal direction away from the vehicle. The width of the first portion may be the same as the width of the vehicle. The second portions may be on opposite sides of the first portion. The second portions may extend laterally away from the first portion (in particular in a direction perpendicular to the longitudinal direction). The second portions may have a width less than half of the width of the first portion.

Being in first portion may be particularly risky when the vehicle must brake because the vulnerable road user in the first portion may not be able to avoid the collision with the rear-end of the vehicle. The first portion may be called a non-safe area. Whereas, when the position of the vulnerable road user is in the second portion, the vulnerable road user may be able to avoid collision with the rear-end of the vehicle more easily (by driving away from the rear-end of the vehicle). The second portion may be called a tolerance area. The method may obtain the first data only when the position of the vulnerable road user is in the first portion (non-safe area) of the zone behind the rear-end of the vehicle.

The second portion may depend on a width of the vulnerable road user. A width of the second portion may be as much as at least the width of the vulnerable road user, preferably, at least 1,25 times of the width of the vulnerable road user, and more preferably at least 1,5

times of the width of the vulnerable road user. In other words, the width of the tolerance area may be a minimum distance for the vulnerable road user to pass/overtake the vehicle. Further, a length of the first portion (extending longitudinally from the vehicle and perpendicular to the width of the first portion) and a length of the second portion, as well as the width of the second portion may depend on a speed, at least one of the first set of indicative criteria, or at least one of the second set of indicative criteria.

Depending on the aforementioned traffic awareness indicating if the vulnerable road user is distracted or paying attention to the road, the first portion and the second portion may be updated. For instance, when the confidence level of the vulnerable road user based on detected eye, head, and/or arm position is detected to be low or moderate, the first portion and/or the second portion may be extended, in other words a length and/or width thereof may be increased. Similarly, when the confidence level is determined to be high, the first portion and the second portion may be kept unchanged.

In another example, depending on the aforementioned second data indicative of the uphill road section, the downhill road section, and the road condition of the road behind the vehicle, the first portion and the second portion may be updated. For instance, when the vehicle is driving on an uphill road section, the first portion and/or the second portion may be increased (especially the length of the first portion and/or the second portion). Whereas, when the vehicle is driving on a downhill road section, the first portion and/or the second portion may be decreased (especially the length of the first portion and/or the second portion). Accordingly, the method may update the first data. When the road user is out of the zone behind the rear-end of the vehicle, the method may terminate. Accordingly, the method may comprise a termination of providing the control instruction.

According to an example, the second data may further be indicative of a signaling of the vulnerable road user indicating a lane switch of the vulnerable road user behind the vehicle. The method may comprise cancelling of providing, or acting upon, the control instruction based on the second data. The signaling may indicate a change in the first data. In other words, the signaling may indicate that the position of the vulnerable road user may not be in the zone behind the rear-end of the vehicle anymore. For instance, the signaling of the vulnerable road user may be a hand gesture, or similar, indicating a lane switch. The hand gesture, or similar, may be obtained by means of a computer vision algorithm. The method may accordingly obtain the second data indicative of the road user avoiding collision with the rear-end of the vehicle. In this example, the vehicle may further obtain information indicating whether the indicated change is before a deceleration/stop position of the vehicle. If the information indicates that the indicated change is before the deceleration/stop position of the vehicle, the method may terminate. Accordingly, the method may comprise cancelling of the control instruction for controlling the vehicle.

According to an example, the method may comprise providing a notification indicative of the position of the road user in the zone behind the rear-end of the vehicle for notifying a driver of the vehicle. In this example, the vehicle may be driven by the driver. The notification may be provided on a display, a dashboard or a screen of the vehicle. The notification may comprise an instruction for controlling the vehicle for reducing the risk of the rear-end collision with the vulnerable road user. For instance, the notification may comprise an instruction for pressing a brake pedal and/or reducing a gear of the vehicle. Accordingly, the driver may be made aware of a possible collision with the vulnerable road user.

According to a second aspect, there is provided a computer program product comprising instructions, which, when the program is executed by a data processing device, hence, what generally is referred to as a computer, cause the data processing device to carry out the method of the first aspect. The computer program product may be a computer program as such or a product, such as a storage medium, having stored thereon the computer program or instructions, for example.

According to a third aspect, there is provided a data processing device comprising means for carrying out the method of the first aspect. The data processing device may for example be an ECU, Engine Control Unit, a PCU, Powertrain Control Unit, one or more stand-alone or connected ASIC(s), Application Specific Integrated Circuit(s), or any other centralized or distributed data processing device of the vehicle capable of, or configured for, performing computational tasks.

According to a fourth aspect, there is provided a vehicle comprising at least one of the computer program product of the second aspect and the data processing device of the third aspect.

It should be noted that the above examples may be combined with each other irrespective of the aspect involved. Accordingly, the method may be combined with structural features and, likewise, the vehicle may be combined with features described above with regard to the method.

These and other aspects of the present disclosure will become apparent from and elucidated with reference to the examples described hereinafter.

### BRIEF DESCRIPTION OF DRAWINGS

Examples of the disclosure will be described in the following with reference to the following schematic drawings.
- Figure 1: shows a flow diagram of a method for reducing a risk of a rear-end collision of a road user with a rear-end of a vehicle.
- Figure 2: shows a vehicle and a road user according to prior art.
- Figure 3: shows a vehicle comprising at least one of a computer program product and a data processing device for carrying out the method of Figure 1.
- Figure 4: shows a vehicle and a road user in a zone behind the rear-end of the vehicle, wherein the method of Figure 7 is executed.
- Figures 5a, 5b: show a vehicle and a road user in different traffic situations, which may lead to a collision of the vulnerable road user with another road user.
- Figures 6a-6c: show a vulnerable road user with different levels of traffic awareness.
- Figures 7a: shows a vehicle with a zone and a vulnerable road user at a rear-end of the vehicle on an uphill road section.
- Figure 7b: shows a vehicle with a zone and a vulnerable road user at a rear-end of the vehicle on a downhill road section.

### DETAILED DESCRIPTION

The Figures are merely schematic representations and serve only to illustrate examples of the disclosure. Identical or equivalent elements are in principle provided with the same reference signs.

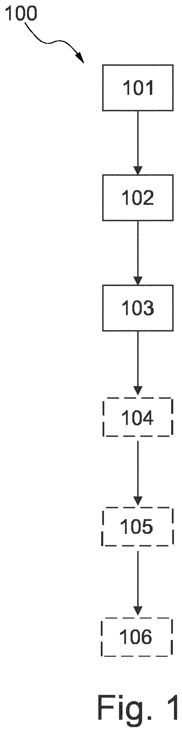

Figure 1 shows a flow diagram of a method 100 for reducing a risk of a collision of a road user 2 (not shown) with a rear-end 11 of a vehicle 1 (not shown). The method 100 comprises obtaining first data indicative of a position of the road user 2 in a zone 3 behind the rear-end 11 of the vehicle 1 (step 101), obtaining second data indicative of the road user 2 being a vulnerable road user 2 (step 102), and providing a control instruction for controlling the vehicle 1 for reducing the risk of a the rear-end 11 collision based on the first data and the second data (step 103). In an example, the method 100 further comprises the optional operation of obtaining third data indicative of a deceleration to be performed by the vehicle 1 in response to at least one of a traffic situation ahead of a current position of the vehicle 1 and/or a routing of the vehicle 1 (step 104). In another example, the method 100 comprises, before providing the control instruction, the optional operation of obtaining fourth data indicating whether the deceleration to be performed by the vehicle 1 as indicated by the third data is a mandatory deceleration or optional deceleration (step 105). In yet another example, the method 100 comprises the optional operation of providing a notification indicative of the deceleration to be performed by the vehicle 1 to at least one of a device 15 of the vulnerable road user 2 and/or another vehicle (step 106).

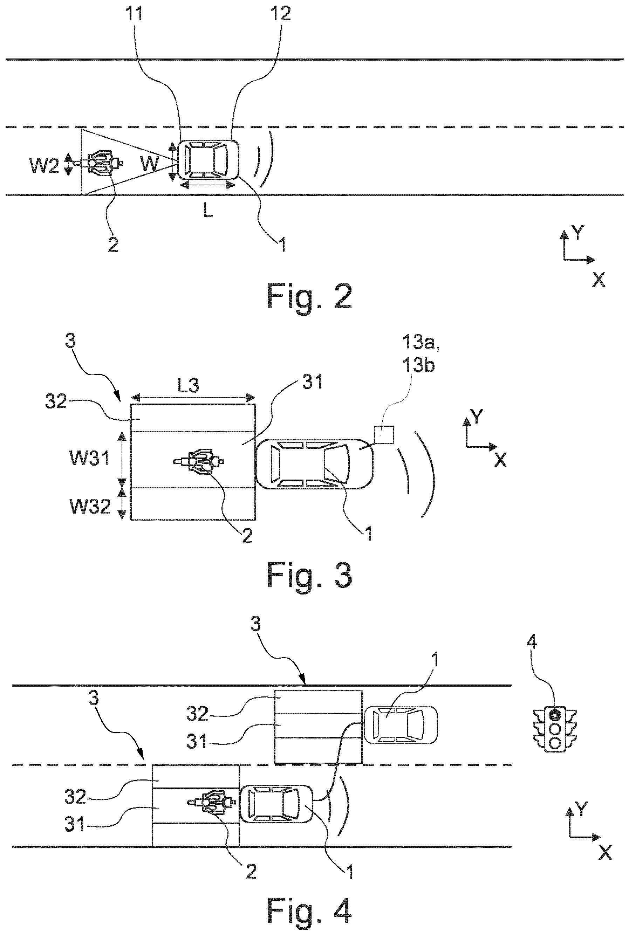

Figure 2 shows a vehicle 1 and a road user 2 according to prior art. The vehicle 1 has a length L and a width W and the road user a width W2. The vehicle 1 comprises a rear-end 11 at a backside of the vehicle 1 and a front-end 12, opposite to at the rear-end 11 of the vehicle 1. The rear-end 11 faces away from a direction of travel, in a direction shown by -X. The rear-end 11 has the same width as the front-end 12 of the vehicle 1.

Figure 3 shows a vehicle 1 comprising at least one of a computer program product 13a and a data processing device 13b for carrying out the method 100 of Figure 1 for reducing the risk of a collision of the road user 2 with the rear-end 11 of the vehicle 1 (note that reference signs shown in previous figures, such as the rear-end 11 of the vehicle 1, are not necessarily shown in all other figures for the sake of clarity of the figures). The road user 2 is in the zone 3 behind the rear-end 11 of the vehicle 1. The road user 2 is a bicyclist and therefore is a vulnerable road user 2. The zone 3 extends from the rear-end 11 of the vehicle 1 in a direction opposite to the front-end 12 of the vehicle 1, in other words, in the X direction. The zone 3 has a length L3. The zone 3 is extending both longitudinal (X direction) as well as lateral (Y direction). The second data obtained by the step 101 of the method 100 as shown in Figure 1, is indicative of the road user 2 being in the zone 3.

Figure 4 shows a vehicle 1 and a road user 2 in a zone 3 behind the rear-end 11 of the vehicle 1, wherein the method 100 of Figure 1 is executed. The zone 3 comprise a first portion 31 behind the rear-end 11 of the vehicle 1 and second portions 32 adjacent to the first portion 31. The first portion 31 is called a non-safe area and the second portion 32 a tolerance area. The first portion 31 has a width W31 essentially same as the width W of the vehicle 1. The first portion 31 extends in a length (longitudinal) direction X away from the vehicle 1. The second portions 32 are on opposite sides of the first portion 31. The second portions 32 extend laterally away from the first portion 31, in Y+ and Y- directions. The second portions 32 have a width W32 less than a half of the width W31 of the first portion 31, although it may depend on a width W2 of the vulnerable road user 2. So the width W32 of the second portion 32 may be as much as at least the width W2 of the vulnerable road user 2.

The vehicle is shown in a traffic situation in Figure 4 that ahead of a current position of the vehicle 1 there is a traffic light 4. The traffic light 4 indicates a red light and thus deceleration to be performed by the vehicle 1 and/or that routing of the vehicle 1 is to be considered. The vehicle 1 changes a lane for reducing the risk of a rear-end collision with the vulnerable road user 2 based on a control instruction of the method 100 as shown in Figure 1. By changing the lane, the zone 3 gets free of the vulnerable road user 2 and the method 100 may terminate.

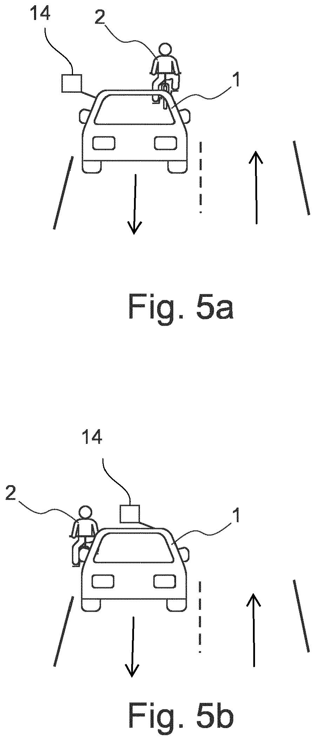

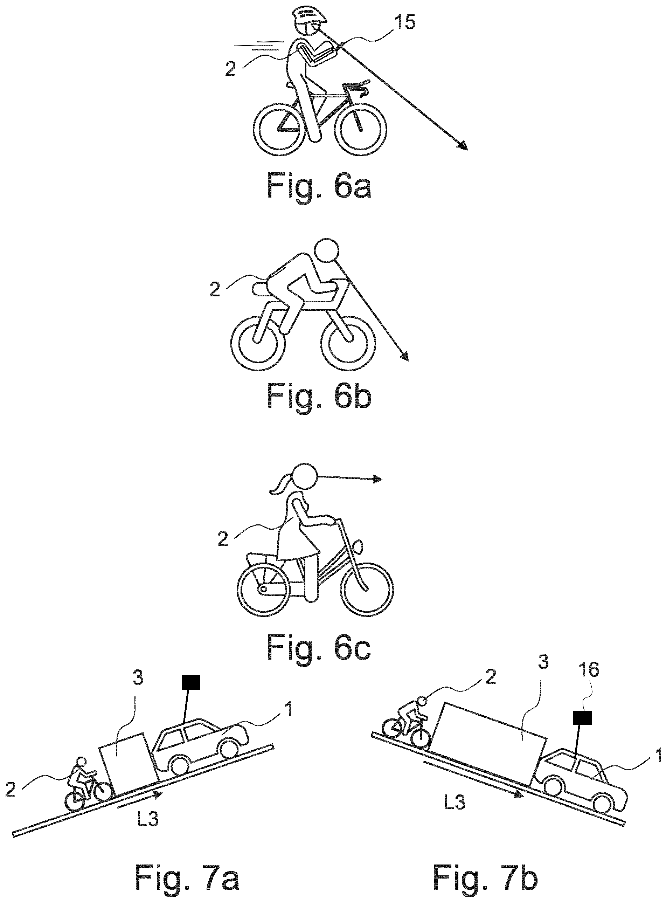

Figures 5a and 5b show a vehicle and a road user in different traffic situations, which may lead to a collision of the vulnerable road user 2 with another road user. The vulnerable road user is positioned in the zone 3 (not shown) behind the vehicle 1. The vehicle 1 comprises a communication equipment 14 capable of transmitting and/or receiving signals to and from a device 15 of the vulnerable road user 2 (see Figure 6a) and/or a device of a second vehicle (not shown). Accordingly, the vehicle 1 can provide a notification indicative of the deceleration to be performed by the vehicle 1 to at least one of the device 15 of the vulnerable road user 2 and the second vehicle (step 106). When the second vehicle is travelling on an opposite lane and approaching towards the vehicle 1 (not shown), the vehicle 1 may determine if the position of the vulnerable road user 2 on a driven lane is closer to the lane on which the second vehicle is driving. In Figure 5a the vulnerable road user 2 is closer to the lane on which the second vehicle is driving (not shown). In this case, the vehicle 1 notifies the vulnerable road user 2 and/or the second vehicle. In Figure 5b, the vulnerable road 2 user is closer to a lane opposite to the lane on which the second vehicle is driving (not shown). In this case, the vehicle 1 cancels notification of the vulnerable road user 2.

Figures 6a-6c show a vulnerable road user 2 with different levels of traffic awareness, hence, what according to aspects of the disclosure may be comprised in the second data. The vulnerable road user 2 is depicted as a bicyclist The traffic awareness may comprise a confidence level of the vulnerable road user 2 based on detected eye, head, and/or arm position of the vulnerable road user. In Figure 5a, the confidence level is determined as "low" because eyes of the vulnerable road user 2 are not detected, head position is up (not facing the driven road), and arms are not on the handlebar of the bicycle. In Figure 5b, the confidence level is determined as "moderate" because eyes are not detected but head position is down and arms are on the handlebar. In the case of moderate confidence level, the vulnerable road 2 user may not be distracted, but not aware of a vehicle at front. In Figure 5c the confidence level is determined as "high" because head position is facing the driven road, eyes are detected, and arms are on a handle bar.

Figures 7a shows a vehicle 1 with a zone 3 and a vulnerable road user 2 at a rear-end 11 of the vehicle 1 on an uphill road section. Figure 7b shows a vehicle 1 with a zone 3 and a vulnerable road user 2 at a rear-end 11 of the vehicle 1 on a downhill road section. The vehicle 1 comprises an inclination or accelerometer sensor 16 to determine the uphill road section and the downhill road section. Downhill road section and uphill road section may require a different action compared to a flat road section. As shown in Figure 7a, the length L3 of the zone 3 is shorter in the uphill road section compared to the length L3 of the zone 3 in the downhill road section.

As used herein, the phrase "at least one," in reference to a list of one or more entities should be understood to mean at least one entity selected from any one or more of the entities in the list of entities, but not necessarily including at least one of each and every entity specifically listed within the list of entities and not excluding any combinations of entities in the list of entities. This definition also allows that entities may optionally be present other than the entities specifically identified within the list of entities to which the phrase "at least one" refers, whether related or unrelated to those entities specifically identified. Thus, as a non-limiting example, "at least one of A and B" (or, equivalently, "at least one of A or B," or, equivalently "at least one of A and/or B") may refer, in one example, to at least one, optionally including more than one, A, with no B present (and optionally including entities other than B); in another example, to at least one, optionally including more than one, B, with no A present (and optionally including entities other than A); in yet another example, to at least one, optionally including more than one, A, and at least one, optionally including more than one, B (and optionally including other entities). In other words, the phrases "at least one," "one or more," and "and/or" are open-ended expressions that are both conjunctive and disjunctive in operation. For example, each of the expressions "at least one of A, B, and C," "at least one of A, B, or C," "one or more of A, B, and C," "one or more of A, B, or C," and "A, B, and/or C" may mean A alone, B alone, C alone, A and B together, A and C together, B and C together, A, B, and C together, and optionally any of the above in combination with at least one other entity. Further, naming data as first, second, third, etc. merely serves to distinguish the data in the disclosure and does not imply any limitation in sequence. For example, when fourth data is mentioned in the description or the claims, this does not necessarily require first, second and/or third data to be a part of the disclosure, unless it is explicitly described or is sufficiently clear from the context.

Other variations to the disclosed examples can be understood and effected by those skilled in the art in practicing the claimed disclosure, from the study of the drawings, the disclosure, and the appended claims. In the claims the word "comprising" does not exclude other elements or steps and the indefinite article "a" or "an" does not exclude a plurality. A single processor or other unit may fulfill the functions of several items or steps recited in the claims. The mere fact that certain measures are recited in mutually different dependent claims does not indicate that a combination of these measures cannot be used to advantage. A computer program may be stored/distributed on a suitable medium such as an optical storage medium or a solid-state medium supplied together with or as part of other hardware, but may also be distributed in other forms, such as via the Internet or other wired or wireless telecommunication systems. Any reference signs in the claims should not be construed as limiting the scope of the claims.

### LIST OF REFERENCE SIGNS

- 100: method
- 101-106: method steps
- 1: vehicle
- 11: rear-end
- 12: front-end
- 13a: computer program product
- 13b: data processing device
- 14: communication equipment
- 15: device
- 16: inclination or accelerometer sensor
- 2: road user, vulnerable road user
- 3: zone
- 31: first portion
- 32: second portion
- 4: traffic light
- L, L3: length
- W, W2, W31, W32: width

## Claims

1. A computer-implemented method (100) for reducing a risk of a collision of a road user (2) with a rear-end (11) of a vehicle (1), the method (100) comprising:
- obtaining first data indicative of a position of the road user (2) in a zone (3) behind the rear-end (11) of the vehicle (101),
- obtaining second data indicative of the road user (2) being a vulnerable road user (2) (102), and
- providing a control instruction for controlling the vehicle (1) for reducing the risk of the rear-end collision based on the first data and the second data (103).

2. The method (100) of claim 1, the vulnerable road user (2) being any of a bicyclist, a motorcyclist, and a scooter rider.

3. The method (100) of claim 1 or 2, the method (100) comprising:
- obtaining third data indicative of a deceleration to be performed by the vehicle (1) in response to at least one of:
o a traffic situation ahead of a current position of the vehicle (1), and
o a routing of the vehicle (104),
the instruction being further based on the third data.

4. The method (100) of claim 3, the method (100) comprising
- before providing the control instruction, obtaining fourth data indicating whether the deceleration to be performed by the vehicle (1), as indicated by the third data, is a mandatory deceleration or an optional deceleration (105).

5. The method (100) of claim 3 or 4, the control instruction being configured to avoid or limit the deceleration to be performed by the vehicle (1) as indicated by the third data.

6. The method (100) of any of the claims 3 to 5, the control instruction being configured for at least one of accelerating, laterally moving, and rerouting the vehicle (1).

7. The method (100) of any one of claims 3 to 6, the method (100) comprising:
- providing a notification indicative of the deceleration to be performed by the vehicle (1) to at least one of:
o a device (15) of the vulnerable road user (2), and
o another vehicle, the another vehicle travelling in a direction opposite to a travel direction of the vehicle (1) (106).

8. The method (100) of any one of the previous claims, the second data further being indicative of at least one from an age, a traffic awareness, a body posture, and a driving behavior of the vulnerable road user (2).

9. The method (100) of any one of the previous claims, the second data further being indicative of at least one from an uphill road section, a downhill road section, and a road condition of a road behind the vehicle (1).

10. The method (100) of any one of claims 7 and 8, the zone (3) being defined based on the second data.

11. The method (100) of any one of the previous claims, the zone (3) comprising a first portion (31) behind the rear-end (11) of the vehicle (1), the first portion (31) having a width (W31) being at least the width (W) of the vehicle (1), and the zone (3) comprising second portions (31) adjacent to the first portion (31), the control instruction being further based on whether the vulnerable road user (2) is positioned in the first portion (31) or the second portion (32) of the zone (3).

12. The method (100) of any one of the previous claims, the second data further being indicative of a signaling of the vulnerable road user (2) indicating a lane switch of the vulnerable road user (2) behind the vehicle (1), and the method comprising cancelling the control instruction based on the second data.

13. A computer program product (13a) comprising instructions which, when the program is executed by a data processing device, cause the data processing device to carry out the method (100) of any one of the claims 1 to 12.

14. A data processing device (13b) comprising means for carrying out the method (100) of any one of the claims 1 to 12.

15. A vehicle (1) comprising at least one of the computer program product (13a) of claim 13 and the data processing device (13b) of claim 14.
